# EUROPEAN PATENT SPECIFICATION

(11) **EP 0 432 738 B1**
(45) Date of publication and mention of the grant of the patent: **14.02.1996**
(21) Application number: 90123849.3
(22) Date of filing: 11.12.1990
(51) Int. Cl.: G21C 3/04, G21C 3/32

(54) **Fuel assembly for a boiling water nuclear reactor**
Brennstoffeinheit für einen Siedewasserreaktor
Unité de combustible pour un réacteur à eau bouillante

(30) Priority: 14.12.1989 SE 8904218
(43) Date of publication of application: 19.06.1991
(73) Proprietor: ABB ATOM AB, S-721 83 Västeras (SE)
(72) Inventor: Nylund, Olov, S-721 17 Västeras (SE)
(74) Representative: Boecker, Joachim, Dr.-Ing.

(56) References cited:
- DE-B- 1 028 705
- SE-B- 450 177

## Description

The invention relates to a fuel assembly for a boiling water nuclear reactor according to the precharacterising part of claim 1. Such a fuel assembly is already known from the SE-B-450 177.

Experience shows that, for example in connection with repair and service of a nuclear reactor , debris may enter, which debris then move with the water circulating through the reactor core. The debris may for example, consist of metal chips (borings) formed in connection with repair of, for example, a steam separator, pieces of metal wire, or other foreign particles which have entered the system from outside. The debris may give rise to abrasion damage, which has serious consequences if the damage arises on parts which are particularly easily damaged, such as fuel rods.

To avoid damage of the above-mentioned kind in pressurized water reactors, it is known to provide the bottom tie plates which already exist below the fuel rod bundle with a large number of holes to enable each bottom tie plate, in addition to its normal function, to function as a debris catcher in the form of a strainer and prevent debris from reaching the fuel rod bundle with control rod guide tubes and spacers. By arranging the debris catcher in this way, it may be given a very low flow resistance and hence it constitutes a minimum obstacle to the desired flow. However, if with this design the debris catcher is partly clogged, the distribution of the flow of water is uneven in the lower part of the fuel rod bundle.

The DE-A-1 028 705 describes a nuclear reactor with a reactor core formed of a graphite block with holes into which fuel assemblies are inserted. The moderator is formed by the graphite. The coolant consists of a gas, preferably carbon dioxide, which flows upwards through the fuel assemblies. At the upper end of each fuel assembly, above the fuel elements, there is a filter element arranged which prevents radioactive fission products to escape from the fuel assembly along with the coolant. The filter element has a long cylindrical shape extending in the axial direction of the fuel assembly.

The invention aims at developing a fuel assembly for a boiling water nuclear reactor of the above-mentioned kind with a debris catcher which can easily be supplemented to already existing fuel assemblies and which is not susceptible to uneven water supply in case of partial clogging of the debris catcher.

To achieve this aim the invention suggests a fuel assembly for a boiling water nuclear reactor according to the introductory part of claim 1, which is characterized by the features of the characterizing part of claim 1.

Further developments of the invention are characterized by the features of the additional claims.

One advantage of locating the debris catcher according to the invention below the bottom tie plate, is that the flow, because of the distance between the debris catcher and the bottom tie plate, has time to even itself out if some part of the debris catcher should be clogged. Another advantage of the invention is that it is possible in a simple way to supplement already existing fuel assemblies with debris catchers.

According to a particularly advantageous embodiment of the invention, the debris catcher consists of a strainer, parallel to the bottom tie plate, preferably in the form of a strainer plate. If the strainer is arranged below the bottom tie plate, it has, in addition to the advantages mentioned above, the advantage of being capable of being inspected as well as being capable of being removed and cleaned without any problems. A strainer parallel to the bottom tie plate is preferably arranged with an edge zone in the form of a gap towards adjacent parts of the fuel assembly, preferably with lower relative flow resistance than in the strainer itself and provided with projections extending into the edge zone.

If the strainer is arranged above the bottom tie plate, it is formed with holes for end plugs at the bottom of the fuel rods, the holes being preferably larger than the cross section of the end plugs so that internal zones preferably with lower relative flow resistance than in the rest of the strainer exist around the end plugs, and further provided with projections which extend into the internal zones.

According to an additional embodiment of the invention, the debris catcher consists of a container which is arranged below the bottom tie plate and which has limiting walls, parallel to the bottom tie plate and provided with holes, and which container contains a sparse stack of folded sheets.

According to other embodiments, the debris catcher is formed as a unit common to four fuel assemblies. In this case four fuel assemblies of the same kind are arranged adjacent to each other around a common channel for water, and the bottom part is formed as a vertical tube with an upper conical portion, which is connected to the outwardly-facing bottom portions of the casing parts of the fuel assemblies. According to such an embodiment, the debris catcher may consist of a funnel-shaped strainer, arranged in the conical portion of the bottom part, with the narrower part of the funnel directed downwards. In such an embodiment the strainer may cover the entire cross section of the tube. In another embodiment of this type the strainer may be provided with an opening at its narrower funnel end which takes up a considerable part of the cross section of the tube. In this latter case, guide vanes are arranged in the tube such as to impart centrifugal forces on the water to prevent debris from passing through the opening at the narrower end of the funnel-shaped strainer. According to another embodiment with a common debris catcher for a unit of the kind described composed of four fuel assemblies, the debris catcher comprises a number on concentric sheet metal cones, arranged in the conical portion of the bottom part and provided at the upper end with an outwardly-directed, bent-down edge for catching debris.

By way of example, the invention will now be described in greater detail with reference to the accompanying drawings showing in
- Figure 1: a vertical section through the line I-I in Figure 2 of an embodiment of a composed fuel assembly composed of four fuel assemblies according to the invention with a debris catcher in the form of a strainer plate arranged below the bottom tie plate on each fuel assembly,
- Figure 2: the same composed fuel assembly as in Figure 1 contemplated from above,
- Figure 3: a horizontal section along the line III-III in Figure 1,
- Figure 4: a view from below of a strainer plate in the composed fuel assembly according to figure 1,
- Figure 5: a vertical section of the same strainer plate along the line A-A in Figure 4,
- Figure 6: a vertical section of part of a fuel assembly with a strainer plate arranged above the bottom tie plate,
- Figure 7: a view from above of the strainer plate in Figure 6,
- Figure 8: a vertical section of the lower part of a composed fuel assembly with a debris catcher in the form of a container, arranged below the bottom tie plate of each fuel assembly, with limiting walls with through-holes,
- Figure 9 and 10: the lower part of a composed fuel assembly composed of four fuel assemblies according to the invention with a debris catcher in the form of a funnel-shaped strainer plate which is common to the four fuel assemblies and a common system of conical sheet metal cones, respectively.

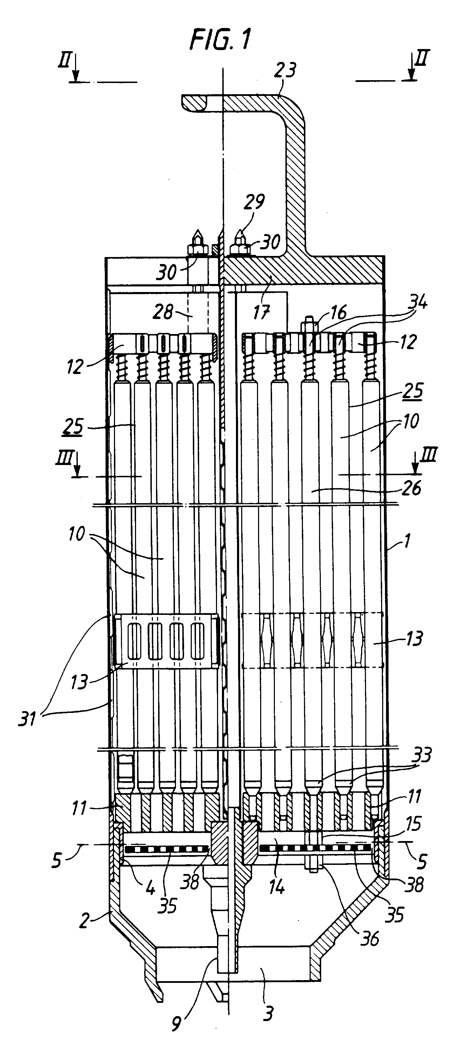

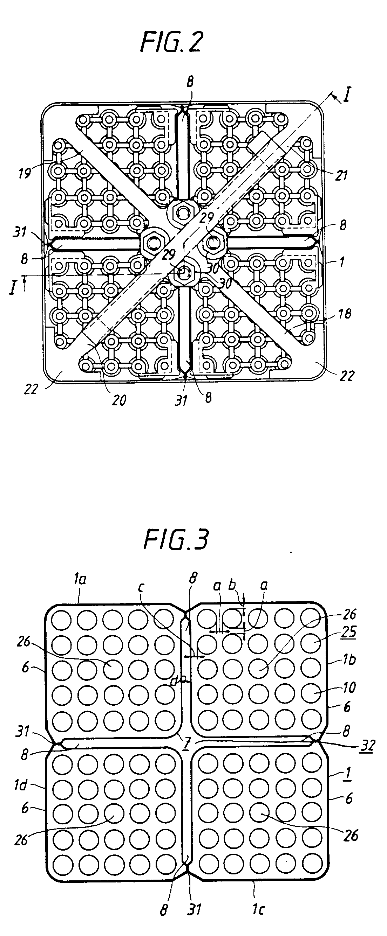

In Figures 1 to 3, numeral 1 designates a fuel channel with substantially square cross section. The fuel channel surrounds, with no significant play, an upper square portion of a bottom part 2, which has a circular, downwardly-facing inlet opening 3 for cooling water and moderator water. In addition to supporting the fuel channel 1, the bottom part 2 also supports a supporting plate 4. At the lower part the fuel channel 1 has a relatively thick wall portion which is fixed to the bottom part 2 and the supporting plate 4 by means of a plurality of horizontal bolts, indicated by dashdotted lines 5. By means of a hollow support member 7 of cruciform cross section, the fuel channel 1 is divided into four vertical tubular parts 6 having at least substantially square cross section. The support member 7 is welded to the four walls 1a, 1b, 1c and 1d of the fuel channel 1 and has four hollow wings 8. The central channel formed by the support member is designated 32 and is connected at its lower part to an inlet tube 9 for moderator water. Each tubular part 6 contains a bundle 25 of twenty-five fuel rods 20. The rods are arranged in a symmetrical lattice in five rows each containing five rods. Each rod is included in two rows perpendicular to each other. Each bundle is arranged with a grid-like bottom tie plate 11, a grid-like top tie plate 12 and a plurality of spacers 13. A fuel rod bundle 25 with a bottom tie plate, a top tie plate 12, spacers 13 and a casing part 6 forms a unit which in this application is referred to as a fuel assembly, whereas the device comprising four such fuel assemblies shown in Figures 1-3 is referred to as a composed fuel assembly. In the composed fuel assembly the four bottom tie plates 11 are supported by the supporting plate 4 and are partially each inserted into a corresponding square hole 14 therein. In each fuel assembly at least one of the fuel rods is provided with relatively long, threaded end plugs 33 and 34 of solid cladding material, the lower end plug 33 being passed through the bottom tie plate 11 and provided with a nut 15 and the upper end plug 34 being passed through the top tie plate 12 and provided with a nut 16. In the embodiment shown the centre rod 26 is formed in this way. This rod also serves as spacer holder rod. An upper end portion of the fuel channel 1 surrounds a cruciform lifting plate 17 with four horizontal arms 18, 19, 20 and 21, which extend from a common central portion. At the outer end each arms has an arrowhead-like portion 22, which in each respective corner of the fuel channel 1 makes contact with the inner wall surface of the fuel channel 1. A lifting handle 23 is fixed to the arms 20 and 21. The lifting plate 17 and the handle 23 together form a steel lifting member cast in one piece. The lifting plate 17 is fixed to the support member 7 by inserting four vertical bars 28 into respective wings 8 of the support member 7 and welding them thereto. At the upper end each bar 28 has a vertical, boltlike portion 29 which is passed with play through a corresponding hole in the mid-portion of the lifting plate 17 and provided with a nut 30. As will be clear from the figures, the fuel channel 1 is provided with indentations 31, intermittently arranged in the longitudinal direction, to which the wings 8 of the support member 7 are welded.

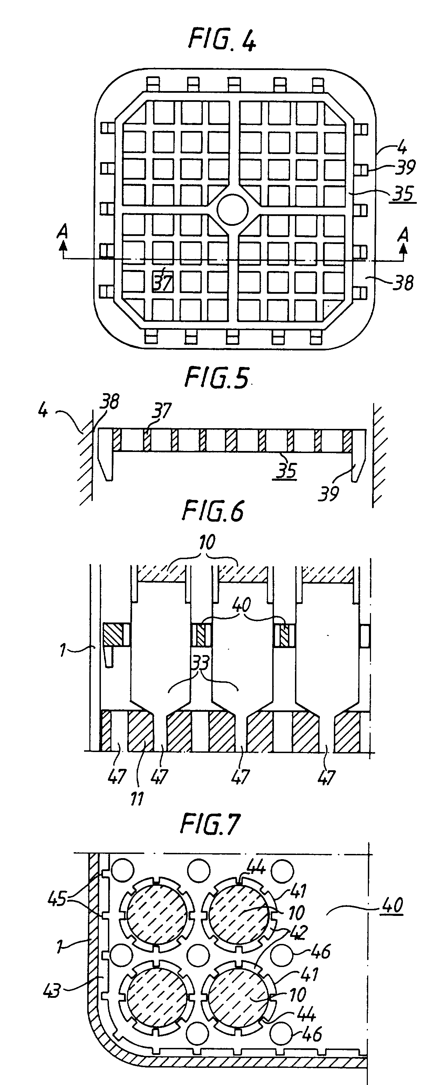

In accordance with the invention, a debris catcher 35 in the form of a strainer plate is arranged below each bottom tie plate 11 and at a distance of at least 0.5 cm from the bottom tie plate in the composed fuel assembly shown in Figure 1. The debris catcher is fixed with a nut 36 to the same end plug 33 as that on which the nut 15 is applied. In the exemplified case, as will be clear from Figures 4 and 5, the strainer plate is formed with bars 37 into a grid. Each square of the grid in the example has a size of 3 x 3 mm. Around the strainer plate, between the same and the supporting plate 4, there is arranged an edge zone in the form of a gap 38 with lower relative flow resistance than in the strainer plate itself. The strainer plate is provided with projections 39 extending into the edge zone. The strainer plate may be formed in many different ways, for example, it may consist of sheet metal from which circular or elongated holes are punched out. It may also be formed in layers, suitably in the form of plates, with mutually displaced holes. Instead of a strainer plate, a strainer in the form of a wire netting may be used.

In the case illustrated in Figures 6 and 7, a debris catcher in the form of a strainer plate 40 is arranged above the bottom tie plate 11. The holes 41 in the strainer plate for the end plugs 33 at the lower part of the fuel rods 10 are larger than the cross section of the end plugs so that inner zones 42 with a lower relative flow resistance than in the rest of the strainer plate are present around the end plugs of the fuel rods. The strainer plate is also arranged with an edge zone 43 between the strainer plate and the casing part 1 with a lower relative flow resistance. Both in the inner zones 42 and in the edge zone 43, the strainer plate is provided with projections 44 and 45, respectively. Furthermore, the strainer plate is provided with punched-out smaller holes 46. The openings of the bottom tie plate for the cooling water are designated 47. The strainer plate may be secured to the fuel assembly, for example by being fixed to the bottom tie plate 11 with spacers and screws (not shown).

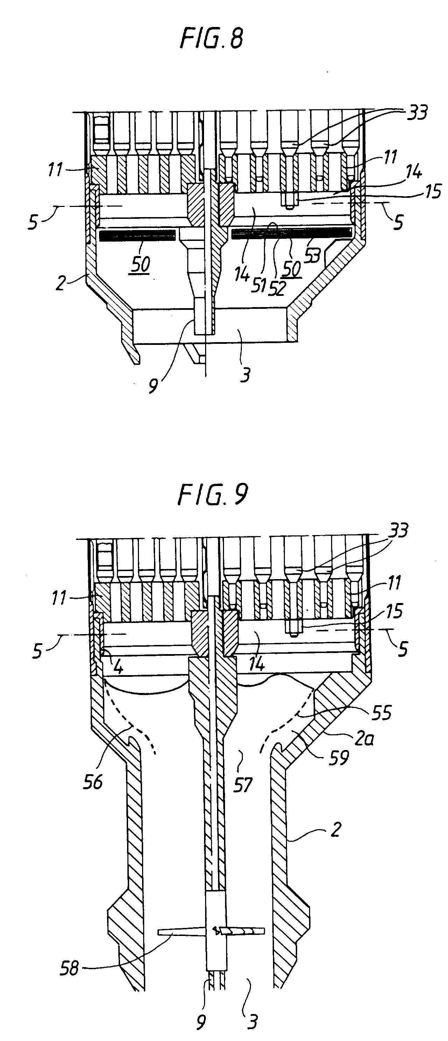

Figure 8 shows the lower part of a composed fuel assembly. The upper part (not shown) is of the same kind as the upper part of the fuel assembly shown in Figure 1. According to Figure 8, each debris catcher comprises a container 50 which is arranged below the bottom tie plate 11 and which has limiting walls 51 and 52, parallel to the bottom tie plate and provided with through-holes (not shown), and contains a sparse stack of folded sheets 53. The holes in the limiting walls are sufficiently large and the stack of sheets sufficiently sparse for the container to provide a low flow resistance to the water while simultaneously providing a good debris catching effect.

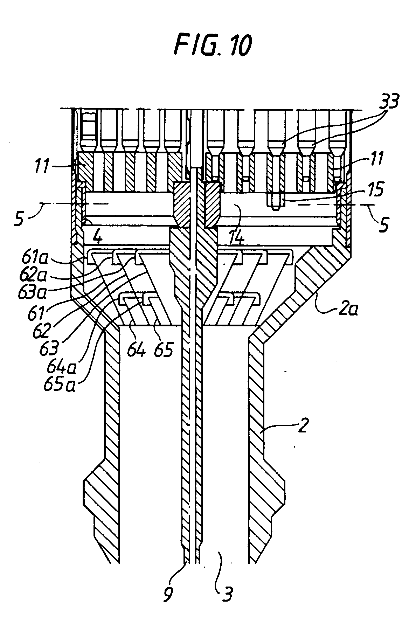

Figure 9 shows the lower part of a composed fuel assembly. The upper part (not shown) is of the same kind as the upper part of the fuel assembly shown in Figure 1. According to Figure 9, the bottom part 2 is formed as a vertical tube with an upper conical portion 2a. The debris catcher comprises a funnel-shaped strainer, arranged in the conical portion 2a of the bottom part, in the form of a strainer plate 55 with the narrower part 56 of the funnel directed downwards and with an opening 57 in the narrower part which takes up a considerable part of the cross section of the tube 2. Guide vanes 58 for the water, to generate centrifugal forces acting on the water, are provided in the tube thus preventing debris particles from passing through the opening in the narrower part of the funnel-shaped strainer plate. A pocket 59 for accumulated debris is arranged in the conical portion 2a.

Figure 10 also shows the lower part of a composed fuel assembly. The upper part (not shown) is of the same kind as the upper part of the fuel assembly shown in Figure 1. Parts 2, 3 and 9 correspond to corresponding parts of the fuel assembly according to Figure 9, and part 2a deviates only in that a pocket 59 is missing. The debris catcher comprises a number of concentric sheet metal cones 61-65, arranged in the conical portion 2a of the bottom part, which have alternately higher (61-63) and lower heights (64, 65). To catch debris, each cone has at its upper end an outwardly-directed, bent-down edge 61a-65a, which forms a narrow flow opening with adjacent sheet metal cones.

## Claims

1. Fuel assembly for a boiling water nuclear reactor, comprising a plurality of vertical fuel rods (10), which are arranged between a bottom tie plate (11) and a top tie plate (12) in a surrounding vertical casing part (6, 1, 7), which is connected at its lower part to a bottom part (2) which is formed with an inlet opening (3) for water to be conducted through the bottom tie plate, through the space between the fuel rods in the vertical casing part and out through the top tie plate, **characterized** in that a debris catcher (35, 50, 55) with low flow resistance to water is provided below the bottom tie plate and at a distance from the bottom tie plate, which distance allows the flow,in case some part of the debris catcher should be clogged, to even itself out in the area between the debris catcher and the bottom tie plate before arriving at the bottom tie plate.

2. Fuel assembly for a boiling water nuclear reactor, comprising a plurality of vertical fuel rods (10), which are arranged between a bottom tie plate (11) and a top tie plate (12) in a surrounding vertical casing part (6, 1, 7), which is connected at its lower part to a bottom part (2) which is formed with an inlet opening (3) for water to be conducted through the bottom tie plate, through the space between the fuel rods in the vertical casing part and out through the top tie plate, **characterized** in that a debris catcher (40) with low flow resistance to water is provided above the bottom tie plate around the lower end plugs (33) of the fuel rods and at a distance from the bottom tie plate, which distance allows the flow to even itself out in the area between the debris catcher and the bottom tie plate in case some part of the debris catcher should be clogged.

3. A fuel assembly according to claim 1 or 2, **characterized** in that the debris catcher comprises a strainer (35, 40) which is parallel to the bottom tie plate.

4. A fuel assembly according to claim 2, **characterized** in that an edge zone in the form of a gap (38, 43) towards adjacent parts (4, 1) of the fuel assembly is arranged around the strainer (35, 40) and that the strainer is provided with projections (39, 45) extending into the edge zone.

5. A fuel assembly according to claim 2 or 3, with the strainer (40) arranged above the bottom tie plate (11), **characterized** in that the strainer is provided with holes (41) for the end plugs which holes are larger in cross section than the end plugs and located such that inner zones (42) are formed around the end plugs, and that the strainer is arranged with projections (44) extending into said inner zones.

6. A fuel assembly according to any of claims 1, 3 and 4, **characterized** in that the debris catcher comprises a container (50) which is arranged below the bottom tie plate and which has limiting walls (51, 52) parallel to the bottom tie plate and provided with through-holes, and that said container (50) comprises a sparse stack of folded sheets (53).

7. A fuel assembly according to claim 1, **characterized** in that it is arranged, together with three fuel assemblies of the same kind, around a central common channel (32) for water, that the bottom part (2) is formed as a vertical tube with an upper conical portion (2a) which is connected to the outwardly-facing bottom portions of the casing parts (6, 1) of the fuel assemblies, and that the debris catcher comprises a funnel-shaped strainer (55) arranged in the conical portion (2a) of the bottom part, the narrower part (56) of the funnel being directed downwards.

8. A fuel assembly according to claim 7, **characterized** in that the strainer (55) is formed with an opening (57) in the narrower part of the funnel, which opening takes up a considerable part of the cross section of the tube (2), and that guide vanes (58) are arranged in the tube such as to generate centrifugal forces on the water to prevent debris from passing through the opening in the narrower part of the funnel-shaped strainer.

9. A fuel assembly according to claim 1, **characterized** in that it is arranged, together with three fuel assemblies of the same kind, around a central common channel (32) for water, that the bottom part (2) is formed as a vertical tube with an upper conical portion (2a) which is connected to the outwardly-facing bottom portions of the casing parts (6, 1) of the fuel assemblies, and that the debris catcher comprises a number of concentric sheet metal cones (61-65), arranged in the conical portion of the bottom part and provided at the upper end with an outwardly-directed bent-down edge (61a-65a).

10. Fuel assembly according to any of the preceding claims, **characterized** in that the distance of the debris catcher from the bottom tie plate is at least 0,5 cm.

## Patentansprüche

1. Brennelement für einen Siedewasserkernreaktor mit einer Vielzahl vertikaler Brennstäbe (10), die zwischen einer Fußplatte (11) und einer Kopfplatte (12) in einem umgebenden vertikalen Brennelementkasten (6, 1, 7) angeordnet sind, welcher an seinem unteren Ende an ein Bodenteil (2) angeschlossen ist, welches eine Einlaßöffnung (3) für durch die Fußplatte zu leitendes Wasser hat, welches den Raum zwischen den Brennstäben und dem vertikalen Kastenteil durchströmt und durch die Kopfplatte austritt, **dadurch gekennzeichnet**, daß unter der Fußplatte ein Schmutzfänger (35, 50, 55) mit geringem Strömungswiderstand für Wasser mit Abstand von der Fußplatte angeordnet ist, welcher Abstand es im Falle einer Verstopfung eines Teils des Schmutzfänger ermöglicht, daß der Fluß sich in dem Bereich zwischen dem Schmutzfänger und der Fußplatte ausgleicht, bevor er die Fußplatte erreicht.

2. Brennelement für einen Siedewasserkernreaktor mit einer Vielzahl vertikaler Ausführungsbeispiel (10), die zwischen einer Fußplatte (11) und einer Kopfplatte (12) in einem umgebenen vertikalen Brennelementkasten (6, 1, 7) angeordnet sind, welcher an seinem unteren Ende an ein Bodenteil (2) angeschlossen ist, welches eine Einlaßöffnung (3) für durch die Fußplatte zu leitendes Wasser hat, welches den Raum zwischen den Brennstäben und dem vertikalen Kastenteil durchströmt und durch die Kopfplatte austritt, **dadurch gekennzeichnet**, daß über der Fußplatte ein Schmutzfänger (40) mit geringem Strömungswiderstand für Wasser um die unteren Endstopfen (33) der Brennstäbe herum in einem Abstand von der Fußplatte angeordnet sind, welcher Abstand es im Falle einer Verstopfung eines Teils des Schmutzfänger ermöglicht, daß der Fluß sich in dem Bereich zwischen dem Schmutzfänger und der Fußplatte ausgleicht.

3. Brennelement nach Anspruch 1 oder 2, **dadurch gekennzeichnet**, daß der Schmutzfänger ein Sieb (35, 40) enthält, welches parallel zur Fußplatte liegt.

4. Brennelement nach Anspruch 2, **dadurch gekennzeichnet**, daß um das Sieb (35, 40) herum eine Randzone in Gestalt eines Spaltes (38, 43) gegenüber benachbarten Teilen (4, 1) des Brennelementes vorgesehen ist und daß das Sieb mit Vorsprüngen (39, 45) versehen ist, die sich in die Randzone erstrecken.

5. Brennelement nach Anspruch 2 oder 3, bei welchem das Sieb (40) über der Fußplatte (11) angeordnet ist, **dadurch gekennzeichnet**, daß das Sieb mit Löchern (41) für die Endstopfen versehen ist, wobei die Löcher einen größeren Querschnitt als die Endstopfen haben und so angeordnet sind, daß innere Zonen (42) um die Endstopfen herum gebildet werden, und daß das Sieb mit Vorsprüngen (44) versehen ist, welche sich in die genannten inneren Zonen erstrecken.

6. Brennelement nach einem der Ansprüche 1, 3 und 4, **dadurch gekennzeichnet**, daß der Schmutzfänger einen Behälter (50) enthält, der unter der Fußplatte angeordnet ist und der mit durchgehenden Löchern versehene begrenzende Wände (51, 52) parallel zu der Fußplatte hat, und daß der genannte Behälter (50) einen dünnen Stapel aus gefalteten Blechen (53) enthält.

7. Brennelement nach Anspruch 1, **dadurch gekennzeichnet**, daß es zusammen mit drei Brennelementen der gleichen Art um einen zentralen Wasserkanal (32) herum angeordnet ist, daß das Fußteil (2) als ein vertikales Rohr mit einem konischen Abschnitt (2a) ausgebildet ist, welcher an den nach außen gerichteten Bodenabschnitt der Kastenteile (6, 1) der Brennelemente angeschlossen ist, und daß der Schmutzfänger ein trichterförmiges Sieb (55) enthält, welches in dem konischen Abschnitt (2a) des Bodenteils angeordnet ist, wobei der engere Teil (56) des Trichters nach unten weist.

8. Brennelement nach Anspruch 7, **dadurch gekennzeichnet**, daß das Sieb (55) eine Öffnung (57) am engeren Teil des Trichters hat, die einen beträchtlichen Teil des Querschnittes des Rohres (2) einnimmt, und daß in dem Rohr Leitschaufeln (58) derart angeordnet sind, daß sie Zentrifugalkräfte auf das Wasser ausüben, um zu verhindern, daß Verunreinigungen die Öffnung im engeren Teil des trichterförmigen Siebes passieren.

9. Brennelement nach Anspruch 1, **dadurch gekennzeichnet**, daß es zusammen mit drei Brennelementen der gleichen Art um einen zentralen gemeinsamen Wasserkanal (32) angeordnet ist, daß das Bodenteil (2) als vertikales Rohr mit einem oberen konischen Abschnitt (2a) ausgebildet ist, welcher an die nach außen weisende Bodenabschnitte der Kastenteile (6, 1) der Brennelemente angeschlossen sind, und daß der Schmutzfänger eine Anzahl konzentrischer Metallblechtrichter (61 bis 65) enthält, die im konischen Abschnitt des Bodenteils angeordnet sind und an ihrem oberen Ende mit einem nach außen gerichteten und nach unten abgebogenen Rand (61a bis 65a) versehen sind.

10. Brennelement nach einem der vorhergehenden Ansprüche, **dadurch gekennzeichnet**, daß der Abstand des Schmutzfängers von der Fußplatte mindestens 0,5 cm beträgt.

## Revendications

1. Assemblage combustible pour un réacteur nucléaire à eau bouillante, comprenant une pluralité de crayons (10) combustibles verticaux, qui sont disposés entre un embout (11) inférieur et un embout (12) supérieur dans un boîtier-canal (6, 1, 7) vertical les entourant, qui est connecté à sa partie inférieure à une partie (2) inférieure dans laquelle a été formée une ouverture (3) d'entrée pour de l'eau destinée à être envoyée, à travers l'embout supérieur, dans la zone se trouvant entre les crayons combustibles dans le boîtier-canal vertical et en sortir, à travers l'embout supérieur, caractérisé en ce qu'un ramasse-débris (35, 50, 55) de faible résistance à l'écoulement de l'eau est prévu sous l'embout inférieur et à distance de l'embout inférieur, cette distance permettant à l'écoulement, dans le cas où certaines parties du ramasse-débris devaient s'engorger, de s'égaliser de soi-même dans la zone située entre le ramasse-débris et l'embout inférieur avant d'arriver à l'embout inférieur.

2. Assemblage combustible pour un réacteur nucléaire à eau bouillante, comprenant une pluralité de crayons (10) combustibles verticaux, qui sont disposés entre un embout (11) inférieur et un embout (12) supérieur dans un boîtier-canal (6, 1, 7) vertical les entourant, qui est connecté en sa partie inférieure à une partie (2) inférieure qui est munie d'une ouverture (3) d'entrée pour de l'eau destinée à être envoyée à travers l'embout inférieur, qui dans la zone entre les crayons combustibles dans le boîtier-canal vertical, et à en sortir, à travers l'embout supérieur, caractérisé en ce qu'un ramasse-débris (40) ayant une faible résistance à l'écoulement de l'eau est prévu au-dessus de l'embout inférieur autour des bouchons (33) d'extrémité inférieure des crayons combustibles et à distance de l'embout inférieur, cette distance permettant à l'écoulement de s'égaliser de soi-même dans la zone située entre le ramasse-débris et l'embout inférieur au cas où certaines parties du ramasse-débris devaient s'engorger.

3. Assemblage combustible selon l'une des revendications 1 ou 2, caractérisé en ce que le ramasse-débris comprend un filtre (35, 40) qui est parallèle à l'embout inférieur.

4. Assemblage combustible selon la revendication 2, caractérisé en ce qu'une zone de bord sous la forme d'un intervalle (38, 43) dirigé vers des parties (4, 1) adjacentes de l'assemblage combustible est disposée autour du filtre (35, 40) et en ce que le filtre est muni d'aspérités (39, 45) s'étendant dans la zone de bord.

5. Assemblage combustible selon la revendication 2 ou 3, le filtre (40) étant disposé au-dessus de l'embout (11) inférieur, caractérisé en ce que le filtre est muni de trous (41) destinés aux bouchons d'extrémité, ces trous ayant une section transversale plus grande que les bouchons d'extrémité et étant situés de manière que des zones (42) intérieures soient formées autour des bouchons d'extrémité, et en ce que le filtre est muni d'aspérités (44) s'étendant dans ces zones intérieures.

6. Assemblage combustible selon l'une quelconque des revendications 1, 3 et 4, caractérisé en ce que le ramasse-débris comprend un récipient (50) qui est disposé en-dessous de l'embout inférieur et qui a des parois (51, 52) de délimitation parallèles à l'embout inférieur et qui sont munies de trous traversants, et en ce que ce récipient (50) comprend un empilage clairsemé de tôles (53) pliées.

7. Assemblage combustible selon la revendication 1, caractérisé en ce que cet assemblage combustible est disposé, et ce avec trois assemblages combustibles du même genre, autour d'un canal commun (32) central pour l'eau, en ce que la partie (2) inférieure est sous la forme d'un tube vertical ayant une partie (2a) conique supérieure qui est reliée aux parties inférieures faisant face vers l'extérieur des boîtiers-canaux (6, 1) des assemblages combustibles, et en ce que le ramasse-débris comprend un filtre (55) en forme d'entonnoir disposé dans la partie (2a) conique de la partie inférieure, la partie (56) la plus étroite de l'entonnoir étant dirigée vers le bas.

8. Assemblage combustible selon la revendication 7, caractérisé en ce que le filtre (55) est muni d'une ouverture (57) dans la partie la plus étroite de l'entonnoir, cette ouverture prenant une partie considérable de la section transversale du tube (2) et en ce que des aubes (58) de guidage sont disposées dans le tube de manière à produire des forces centrifuges sur l'eau afin d'empêcher des débris de passer par l'ouverture dans la partie la plus étroite du filtre en forme d'entonnoir.

9. Assemblage combustible selon la revendication 1, caractérisé en ce que cet assemblage combustible est disposé avec trois assemblages combustibles du même genre, autour d'un canal (32) commun central pour l'eau, en ce que la partie (2) inférieure est sous forme de tube vertical ayant une partie (2a) conique supérieure qui est reliée aux parties inférieures faisant face vers l'extérieur des boîtiers canaux (6, 1) des assemblages combustibles, et en ce que le ramasse-débris comprend plusieurs cônes (61, 65) de tôles métalliques concentriques, disposés dans la partie conique de la partie inférieure, et muni en son extrémité supérieure d'un bord (61a-65a) courbé vers le bas et dirigé vers l'extérieur.

10. Assemblage combustible selon l'une quelconque des revendications précédentes, caractérisé en ce que la distance du ramasse-débris à l'embout inférieur est d'au moins 0,5 cm.
